# FASCICULE DE BREVET EUROPEEN

(11) **EP 4 320 473 B1**
(45) Date de publication et mention de la délivrance du brevet: **10.12.2025**
(21) Numéro de dépôt: 22719977.5
(22) Date de dépôt: 06.04.2022
(51) Int. Cl.: G02B 17/06, G02B 23/04, G02B 23/06, G02B 27/10, G02B 17/08

(54) **TÉLESCOPE BI-CHAMP CATADIOPTRIQUE**
KATADIOPTRISCHES DOPPELFELDTELESKOP
DUAL-FIELD CATADIOPTRIC TELESCOPE

(30) Priorité: 09.04.2021 FR 2103633
(43) Date de publication de la demande: 14.02.2024
(73) Titulaire: Safran Electronics & Defense, 75015 Paris (FR)
(72) Inventeur: DAVENEL, Arnaud, 77550 MOISSY CRAMAYEL (FR); PIDOUX, Julie, 77550 MOISSY CRAMAYEL (FR)
(74) Mandataire: Casalonga
(86) Numéro de dépôt international: PCT/FR2022/050639
(87) Numéro de publication internationale: WO 2022/214766

(56) Documents cités:
- EP-A2- 0 490 497
- WO-A1-98/37449
- CA-A1- 2 505 533
- US-A- 4 877 317
- US-A1- 2017 180 643

## Description

### Domaine technique

L'invention concerne, de manière générale, les systèmes d'imagerie à plusieurs champs d'observation.

Une application particulièrement intéressante de l'invention concerne un système d'imagerie bi-champ de faible encombrement, utilisant des miroirs et dont les deux champs sont superposés sur un même capteur.

### Techniques antérieures

Certaines applications d'imagerie requièrent des systèmes d'imagerie à plusieurs champs d'observation. Par exemple, afin de pouvoir détecter facilement la présence d'un objet dans une scène, un système d'imagerie à grand champ est utilisé. Ensuite, ou en parallèle, afin de pouvoir identifier facilement un objet dans une scène, un système d'imagerie à petit champ est utilisé pour avoir plus de détails.

Un système d'imagerie à plusieurs champs permet donc de combiner les avantages que procure chaque champ individuellement.

Il s'agit en particulier de pouvoir recréer une image dite fovéale. En effet, un œil permet à la fois de détecter un objet dans un champ de vision assez large, et de l'identifier grâce aux capteurs de l'œil situés dans la zone de la fovéa.

Certains systèmes existants utilisent un système à grand champ avec un capteur possédant plus de pixels en son centre pour recréer une image fovéale. Cependant, ces systèmes restent limités car le champ reste finalement le même sur le capteur, le système ne permet que de changer la fréquence spatiale d'échantillonnage.

Parmi les systèmes d'imagerie à plusieurs champs existants, certains comportent autant de capteurs, et d'ensembles optique, que de champs à observer. Ces systèmes nécessitent de recombiner les images reçues des différents capteurs pour obtenir l'image fovéale. De plus, certaines bandes de longueur d'onde nécessitent des capteurs couteux pour être observées. La multiplication des champs devient donc très onéreuse s'il est nécessaire de faire des observations avec un tel capteur. Enfin, ces systèmes sont souvent encombrants.

Il existe d'autres systèmes permettant, avec un seul capteur, d'observer deux champs l'un après l'autre par translation d'au moins deux groupes de lentilles différents en quelques secondes. Les deux informations ne peuvent alors pas être acquises simultanément.

Une autre solution, qui utilise un capteur et deux voies optiques de champ différent, consiste à utiliser une lame séparatrice pour mixer les deux voies d'imagerie. Cependant, ce système divise mécaniquement le flux lumineux par deux. Dans la pratique, ce système est peu compact et pénalisant au niveau de la sensibilité des capteurs, notamment pour des capteurs infrarouges.

De plus, les systèmes existants sont souvent réalisés avec des dioptres fragiles et les lentilles placées à l'extrémité de ces systèmes peuvent être brisées par des chocs ou des projectiles, rendant entièrement aveugle le système d'imagerie.

Enfin, les systèmes existants ne sont pas suffisamment compacts pour pouvoir être embarqués ou encapsulés dans certains boîtiers.

Des systèmes existants sont divulgués dans le document CA 2 505 533 A1, qui divulgue des télescopes bi-champ catadioptriques comprenant des miroirs arrangés de manière spécifique pour chaque voie.

### Exposé de l'invention

La présente invention a donc pour but de pallier les inconvénients du système précité et de fusionner deux images de deux systèmes à focales différentes sur un même capteur à bas coût et dans un environnement compact et robuste.

L'invention a donc pour objet un télescope bi-champ tel que défini dans la revendication 1 comprenant, alignés sur un même axe optique, une voie optique à grand champ, une voie optique à petit champ et un capteur de rayonnement électromagnétique, la voie optique à grand champ comprenant un premier miroir convexe et un deuxième miroir concave perforé en son centre, la voie optique à petit champ comprenant un troisième miroir concave et un quatrième miroir positionné au niveau d'une surface non réfléchissante du premier miroir convexe et de diamètre inférieur ou égal ou diamètre du premier miroir convexe.

Ainsi, ce télescope permet d'acquérir une image fovéale afin d'une part de détecter des objets et, d'autre part, de les identifier. Il présente un capteur unique et n'est ainsi pas sujet à la parallaxe. De plus, les miroirs sont positionnés à l'extrémité du télescope, ce qui garantit une robustesse du télescope. Même si celui-ci reçoit un projectile sur l'un des miroirs, le télescope est toujours en mesure d'acquérir une image. Enfin, le télescope peut être conçu pour être embarqué dans des boîtiers de petits formats, les systèmes optiques des deux champs étant réunis.

Avantageusement, la voie optique à grand champ comprend un diaphragme annulaire de type iris placé au centre du deuxième miroir concave et réglable de sorte que plus le diaphragme est fermé, plus le rayonnement électromagnétique issu de la voie optique à grand champ frappe une périphérie réduite du capteur.

Avantageusement, la voie optique à petit champ comprend un diaphragme en disque de type iris inversé placé au centre du quatrième miroir et réglable de sorte que plus le diaphragme a un diamètre important, plus le rayonnement électromagnétique issu de la voie optique à petit champ frappe le capteur sur un centre réduit du capteur.

Avantageusement, le deuxième miroir concave est perforé circulairement en son centre d'un trou de diamètre sensiblement égal au diamètre du premier miroir convexe.

Avantageusement, le troisième miroir concave a un diamètre supérieur au diamètre du deuxième miroir concave et est configuré pour que la hauteur maximale dans le plan du quatrième miroir des rayons du centre du champ de la voie optique à petit champ est inférieure à la moitié du diamètre du quatrième miroir.

Dans un mode de réalisation, le premier miroir convexe, le deuxième miroir concave, le troisième miroir concave et le quatrième miroir sont des miroirs sphériques ou coniques ou asphériques.

Avantageusement, les focales de la voie optique à grand champ et de la voie optique à petit champ sont de même signe.

Selon un mode de réalisation, la voie optique à grand champ et/ou la voie optique à petit champ comprend un ensemble d'une ou plusieurs lentilles configuré pour focaliser les rayonnements électromagnétiques de chaque voie optique sur le capteur.

Selon un mode de réalisation, la voie optique à petit champ comprend au moins un second capteur et au moins une lame séparatrice configurée pour réfléchir certaines longueurs d'ondes de sorte que les rayons électromagnétiques correspondant à ces longueurs d'onde sont réfléchis vers le second capteur.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre une coupe schématique d'un télescope selon l'invention ;
[Fig 2] illustre deux schémas d'un capteur de rayonnement électromagnétique selon deux configurations de positions des diaphragmes de petit champ et de grand champ ; et
[Fig 3] illustre une coupe schématique d'un télescope selon l'invention comprenant un système multispectral dans la voie optique de petit champ.

### Exposé détaillé d'au moins un mode de réalisation

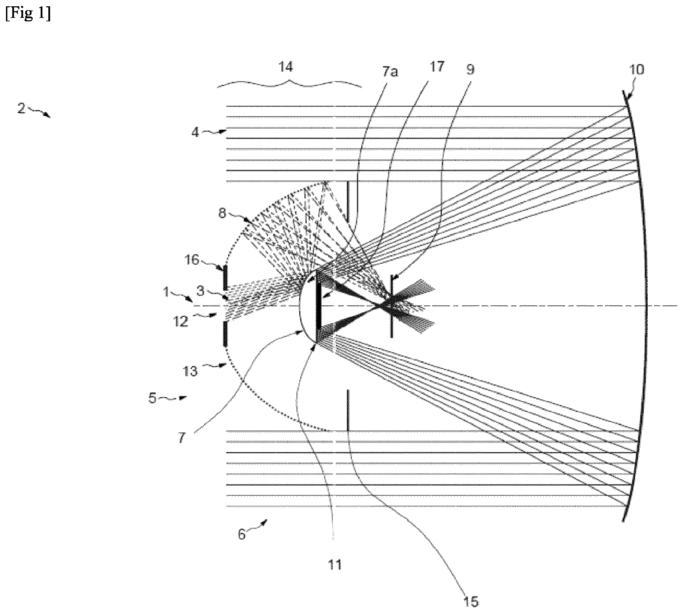

On a représenté sur la figure 1 une coupe passant par l'axe optique 1 d'un télescope 2 selon l'invention. Des rayons électromagnétiques 3 d'un grand champ et des rayons électromagnétiques 4 d'un petit champ sont également représentés de façon schématique, entrant dans le télescope 2 par une voie optique à grand champ 5 et par une voie optique à petit champ 6.

Le télescope 2 comprend, centré sur l'axe optique 1, un premier miroir convexe 7 et un deuxième miroir concave 8 par lesquels sont réfléchis, selon la voie optique à grand champ 5, les rayons électromagnétiques 3 du grand champ jusqu'à un capteur 9 de rayonnement électromagnétique.

Le télescope 2 comprend également, centré sur l'axe optique 1, un troisième miroir concave 10 et un quatrième miroir 11 par lesquels sont réfléchis les rayons électromagnétiques 4 d'un petit champ jusqu'au capteur 9 de rayonnement électromagnétique.

Un grand champ correspond à un champ angulaire élevé entre l'axe optique 1 et l'angle du rayon le plus incliné par rapport à l'axe optique 1, ici entrant dans le télescope 2 par la voie optique à grand champ 5 et frappant le capteur 9.

De même, un petit champ correspond également à un champ angulaire plus réduit entre l'axe optique 1 et l'angle du rayon le plus incliné par rapport à l'axe optique 1, ici entrant dans le télescope 2 par la voie optique à petit champ 6 et frappant le capteur 9.

Par exemple, le petit champ correspond à un champ angulaire de quelques degrés tandis que le grand champ correspond à un champ angulaire de quelques dizaines de degrés.

Les rayons électromagnétiques 3 du grand champ pénètrent dans le télescope 2 vers la voie optique à grand champ 5 et plus particulièrement par un trou 12 pratiqué au centre du deuxième miroir concave 8 et vont frapper le premier miroir convexe 7. Le premier miroir convexe 7 a un diamètre environ égal au diamètre du trou 12 pratiqué dans le deuxième miroir concave 8 afin de capter le maximum de rayons électromagnétiques 3 du grand champ provenant du trou 12 du deuxième miroir concave 8.

Après s'être réfléchis sur le premier miroir convexe 7, les rayons électromagnétiques 3 du grand champ frappent le deuxième miroir concave 8 sur sa surface réfléchissante orientée vers le premier miroir convexe 7. La voie optique à grand champ 5 est donc semblable à une configuration de Cassegrain inversée.

Après réflexion sur le deuxième miroir concave 8, les rayons électromagnétiques 3 du grand champ se dirigent vers le capteur 9 en passant à la périphérie du premier miroir convexe 7.

La surface non réfléchissante 13 du deuxième miroir concave 8 étant orientée vers l'extérieur du télescope 2, si un projectile ou un choc atteint le deuxième miroir concave 8, seule une partie du deuxième miroir concave 8 est inutilisable mais les rayons électromagnétiques 3 du grand champ peuvent se réfléchir sur le reste du deuxième miroir concave 8 et le télescope 2 est toujours utilisable malgré une baisse de luminosité.

Dans un mode de réalisation, la surface extérieure 13 du deuxième miroir concave 8 comprend un revêtement ou un dispositif de protection supplémentaire.

Les rayons électromagnétiques 4 du petit champ pénètrent dans le télescope 2 vers la voie optique à petit champ 6 et plus particulièrement par un espace 14 périphérique au deuxième miroir concave 8 et vont frapper le troisième miroir concave 10. Le troisième miroir concave 10 a un diamètre de taille supérieure au diamètre du deuxième miroir concave 8 afin de capter le maximum de rayons électromagnétiques 4 du petit champ.

Après s'être réfléchis sur le troisième miroir concave 10, les rayons électromagnétiques 4 du petit champ viennent frapper le quatrième miroir 11 sur sa surface réfléchissante orientée vers le troisième miroir concave 10. La voie optique à petit champ 6 est donc semblable à une configuration de Cassegrain.

Le quatrième miroir 11 est placé dos à dos avec le premier miroir convexe 7 et à moins de quelques centimètres l'un de l'autre. En particulier, le quatrième miroir 11 est positionné au niveau d'une surface non réfléchissante 7a du premier miroir convexe 7. Autrement dit, leurs surfaces non réfléchissantes se font face. De plus, le quatrième miroir 11 a environ le même diamètre que le premier miroir convexe 7, de sorte qu'aucun des deux miroirs 7 et 11 n'occulte de manière significative le rayonnement électromagnétique 3 ou 4 de l'une ou l'autre voie optique à petit champ 6 ou grand champ 5. Le quatrième miroir 11 occulte le grand champ de maximum 10%.

Après réflexion sur le quatrième miroir 11, les rayons électromagnétiques 4 du petit champ se dirigent vers le capteur 9 de rayonnement électromagnétique.

Le quatrième miroir 11 est par exemple plat, ou concave ou convexe selon le mode de réalisation.

De même que pour la voie optique à grand champ 5, si un projectile atteint le troisième miroir concave 10, seule une partie du troisième miroir concave 10 est inutilisable mais les rayons électromagnétiques 4 du petit champ peuvent se réfléchir sur le reste du troisième miroir concave 10 et le télescope 2 est toujours utilisable malgré une baisse de luminosité.

Selon la configuration et le mode de réalisation illustrés, le premier miroir convexe 7, le deuxième miroir concave 8, le troisième miroir concave 10 et le quatrième miroir 11 sont sphériques ou coniques ou asphériques afin de réfléchir les rayons électromagnétiques 3 et 4 de chaque voie optique à grand champ 5 ou à petit champ 6 dans la direction désirée.

Dans un mode de réalisation, le premier miroir convexe 7, le deuxième miroir concave 8, le troisième miroir concave 10 et le quatrième miroir 11 sont réalisés en métal.

Pour que la voie optique à petit champ 6 débouche sur le capteur 9, le troisième miroir concave 10 est configuré pour que la hauteur maximale dans le plan du quatrième miroir 11 des rayons du centre du champ de la voie optique à petit champ 6 soit inférieure à la moitié du diamètre du quatrième miroir 11.

En utilisation, le télescope 2 permet au capteur 9 de récolter sur toute sa surface deux images différentes, à savoir une image grand champ et une image petit champ qui se superposent. L'image petit champ est par exemple un détail situé au centre de l'image grand champ.

Cet effet d'agrandissement est réalisé par la différence de focale entre la voie optique à grand champ 5 et la voie optique à petit champ 6.

De plus, du fait d'une grande ouverture du télescope 2 et des voies optiques 5 et 6, la focale de la voie optique à grand champ 5 est courte afin de limiter une obturation centrale trop importante pour la voie optique à petit champ 6.

Par exemple, la voie optique à grand champ 5 a une focale d'environ 1 centimètre tandis que la voie optique à petit champ 6 a une focale d'environ 14 centimètres.

Les focales de la voie optique à petit champ 6 et de la voie optique à grand champ 5 sont de même signe de sorte que leurs images sur le capteur 9 sont dans le même sens.

La voie optique à grand champ 5 comprend un diaphragme fixe 15 entre le deuxième miroir concave 8 et le capteur 9. C'est un diaphragme annulaire laissant passer les rayons électromagnétiques en son centre et empêchant d'autres rayons de se diriger ailleurs que vers le capteur 9.

La voie optique à grand champ 5 comprend également un diaphragme de grand champ 16 positionné au niveau du trou 12 du deuxième miroir concave 8. Ce diaphragme 16 a une forme annulaire de type iris et la largeur de ce diaphragme de grand champ 16 annulaire est réglable de sorte que plus le diaphragme de grand champ 16 est fermé, ne laissant passer que les rayons électromagnétiques passant à proximité de l'axe optique, plus le rayonnement électromagnétique 3 issu de la voie optique à grand champ 5 frappe une périphérie réduite du capteur 9.

De même, la voie optique à petit champ 6 comprend un diaphragme de petit champ 17 positionné au niveau du quatrième miroir 11. Ce diaphragme de petit champ 17 a une forme en disque de type iris inversé et le diamètre de ce diaphragme de petit cham 17 est réglable de sorte que plus le diaphragme de petit champ 17 est fermé, ne laissant passer que les rayons électromagnétiques passant sur la périphérie du quatrième miroir 11, plus le rayonnement électromagnétique 4 issu de la voie optique à petit champ 6 frappe le capteur 9 sur un centre réduit du capteur 9.

En particulier, ces deux diaphragmes de petit champ 17 et de grand champ 16 sont positionnés à des emplacements où les différents angles de champ sont spatialement séparés.

En utilisation, ces diaphragmes de petit champ 17 et de grand champ 16 permettent d'éviter la superposition des deux images issues de la voie optique à grand champ 5 et de la voie optique à petit champ 6.

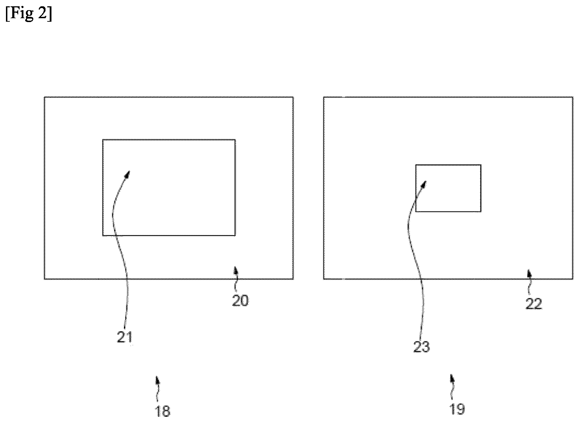

On a représenté sur la figure 2 deux schémas d'un capteur 9 de rayonnement électromagnétique selon deux configurations 18 et 19 de positions des diaphragmes de petit champ 17 et de grand champ 16.

Dans la première configuration 18, le diaphragme de grand champ 16 est fermé aux deux tiers environ tandis que le diaphragme de petit champ 17 est fermé au tiers environ. Ainsi, l'image qui se forme sur le capteur 9 de rayonnement électromagnétique est composée d'une petite partie périphérique 20 issue des rayons 3 du grand champ et d'une grande partie centrale 21 issue des rayons 4 du petit champ.

Dans la deuxième configuration 19, le diaphragme de grand champ 16 est fermé au tiers environ tandis que le diaphragme de petit champ 17 est fermé aux deux tiers. Ainsi, l'image qui se forme sur le capteur 9 de rayonnement électromagnétique est composée d'une grande partie périphérique 22 issue des rayons 3 du grand champ et d'une petite partie centrale 23 issue des rayons 4 du petit champ.

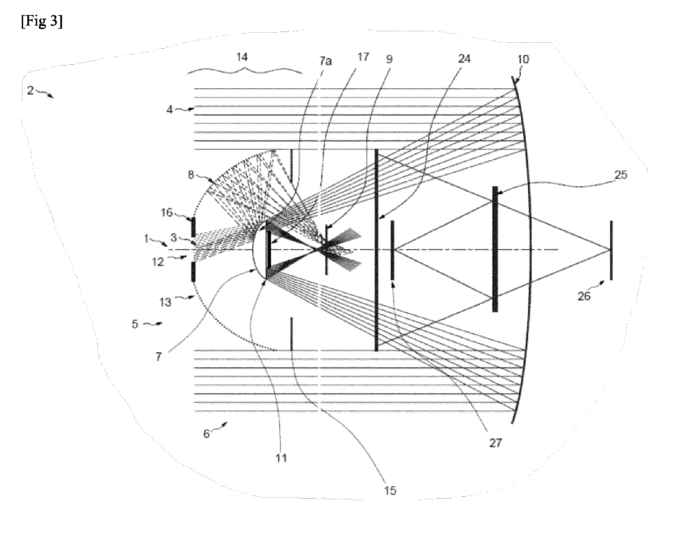

Dans un mode de réalisation représenté sur la figure 3, la voie optique à petit champ 6 comprend une première lame séparatrice 24 entre le troisième miroir concave 10 et le quatrième miroir 11 et une deuxième lame séparatrice 25 positionnée à l'opposé du quatrième miroir 11 par rapport à la première lame séparatrice 24. La première lame séparatrice 24 est construite pour transmettre certaines bandes de longueurs d'onde vers le quatrième miroir 11 et le capteur 9 et pour réfléchir d'autres bandes de longueurs d'onde en direction de la deuxième lame séparatrice 25. La deuxième lame séparatrice 25 permet à son tour de transmettre certaines bandes de longueurs d'onde vers un second capteur 26 et de réfléchir d'autres bandes de longueurs d'onde vers un troisième capteur 27.

Ainsi, l'espace non utilisé du système illustré sur la figure 1 est optimisé pour accueillir un système multispectral à trois bandes de longueurs d'onde pour la voie optique à petit champ 6.

Par exemple, la première lame séparatrice 24 ou la deuxième lame séparatrice 25 sépare des couples de bandes de longueurs d'onde telles que de manière non limitative :
- la bande de lumière visible (de 400 nanomètres à 700 nanomètres environ) et l'infrarouge proche (de 700 nanomètres à 2.5 micromètres environ) ;
- l'infrarouge proche et l'infrarouge moyen (de 3 micromètres à 5 micromètres environ) ;
- le visible et l'infrarouge moyen ;
- l'infrarouge proche et l'infrarouge lointain (de 8 micromètres à 14 micromètres environ) ;
- le visible et l'infrarouge lointain ;
- l'infrarouge moyen et l'infrarouge lointain.

Les lames séparatrices 24 et 25 sont par exemple des lames fabriquées dans un matériau spécifique ayant des propriétés de transparence pour certaines longueurs d'onde, tel que le germanium ou le sulfure de zinc.

Selon un mode de réalisation, les lames séparatrices 24 et 25 ont subi un traitement diélectrique pour pouvoir séparer spécifiquement des bandes de longueurs d'onde de rayonnements électromagnétiques, tel qu'un traitement multicouche.

Chaque capteur 9, 26 ou 27 est un capteur adapté pour détecter les rayonnements électromagnétiques destinés à être transmis ou réfléchis par les lames séparatrices 24 et 25.

De plus, dans un mode de réalisation où l'espace disponible à proximité de l'un des capteurs 9, 26 ou 27 le permet, un système de refroidissement est ajouté à proximité dudit capteur afin d'obtenir de meilleures performances de détection, par exemple pour l'infrarouge lointain ou moyen.

Dans un mode de réalisation non illustré, un ensemble d'une ou de plusieurs lentilles est placé dans la voie optique à grand champ 5 afin de focaliser un maximum de rayons du rayonnement électromagnétique sur le capteur 9. De même, un ensemble d'une ou de plusieurs lentilles est placé dans la voie optique à petit champ 6 afin de focaliser un maximum de rayons du rayonnement électromagnétique sur le capteur 9.

De manière générale, les lentilles, ou tout autre élément optique, positionnées à des emplacements où la voie optique à grand champ 5 est séparée de la voie optique à petit champ 6, ne travaillent que pour une voie optique 5 ou 6. Les lentilles des ensembles d'une ou de plusieurs lentilles sont par exemple trouées au centre pour tenir compte du passage au niveau de l'axe optique 1 d'une voie optique 5 ou 6 à ne pas réfracter.

## Revendications

1. Télescope (2) bi-champ, **caractérisé en ce qu'**il comprend, alignés sur un même axe optique (1), une voie optique à grand champ (5) de type Cassegrain inversé, une voie optique à petit champ (6) de type Cassegrain et un capteur (9) de rayonnement électromagnétique, la voie optique à grand champ (5) comprenant un premier miroir convexe (7) et un deuxième miroir concave (8) perforé en son centre, la voie optique à petit champ (6) comprenant un troisième miroir concave (10) et un quatrième miroir (11) positionné au niveau d'une surface non réfléchissante (7a) du premier miroir convexe (7) et de diamètre inférieur ou égal au diamètre du premier miroir convexe.

2. Télescope selon la revendication 1, dans lequel la voie optique à grand champ (5) comprend un diaphragme (16) annulaire de type iris placé au centre du deuxième miroir concave (8) et réglable de sorte que plus le diaphragme (16) est fermé, plus le rayonnement électromagnétique (3) issu de la voie optique à grand champ (5) frappe une périphérie réduite du capteur (9).

3. Télescope selon l'une des revendications 1 et 2, dans lequel la voie optique à petit champ (6) comprend un diaphragme (17) en disque de type iris inversé placé au centre du quatrième miroir (11) et réglable de sorte que plus le diaphragme (17) a un diamètre important, plus le rayonnement électromagnétique (4) issu de la voie optique à petit champ (6) frappe le capteur (9) sur un centre réduit du capteur (9).

4. Télescope selon l'une quelconque des revendications 1 à 3, dans lequel le deuxième miroir concave (8) est perforé circulairement en son centre d'un trou (12) de diamètre sensiblement égal au diamètre du premier miroir convexe (7).

5. Télescope selon l'une quelconque des revendications 1 à 4, dans lequel le troisième miroir concave (10) a un diamètre supérieur au diamètre du deuxième miroir concave (8) et est configuré pour que la hauteur maximale dans le plan du quatrième miroir (11) des rayons du centre du champ de la voie optique à petit champ (6) est inférieure à la moitié du diamètre du quatrième miroir (11).

6. Télescope selon l'une quelconque des revendications 1 à 5, dans lequel le premier miroir convexe (7), le deuxième miroir concave (8), le troisième miroir concave (10) et le quatrième miroir (11) sont des miroirs sphériques ou coniques ou asphériques.

7. Télescope selon l'une quelconque des revendications 1 à 6, dans lequel les focales de la voie optique à grand champ (5) et de la voie optique à petit champ (6) sont de même signe.

8. Télescope selon l'une quelconque des revendications 1 à 7, dans lequel la voie optique à grand champ (5) et/ou la voie optique à petit champ (6) comprend un ensemble d'une ou plusieurs lentilles configuré pour focaliser les rayonnements électromagnétiques de chaque voie optique (5 ; 6) sur le capteur (9).

9. Télescope selon l'une quelconque des revendications 1 à 8, dans lequel la voie optique à petit champ (6) comprend au moins un second capteur (26 ; 27) et au moins une lame séparatrice (24 ; 25) configurée pour réfléchir certaines longueurs d'ondes de sorte que les rayons électromagnétiques correspondant à ces longueurs d'onde sont réfléchis vers le second capteur (26 ; 27).

## Patentansprüche

1. Zweifeld-Teleskop (2), **dadurch gekennzeichnet, dass** es, ausgerichtet auf derselben optischen Achse (1), einen optischen Weitfeldpfad (5) vom Typ Cassegrain invers, einen optischen Kleinfeldpfad (6) vom Typ Cassegrain und einen Sensor (9) für elektromagnetische Strahlung umfasst, wobei der optische Weitfeldpfad (5) einen ersten konvexen Spiegel (7) und einen zweiten konkaven Spiegel (8) umfasst, der in seiner Mitte perforiert ist, wobei der optische Kleinfeldpfad (6) einen dritten konkaven Spiegel (10) und einen vierten Spiegel (11) umfasst, der an einer nicht reflektierenden Oberfläche (7a) des ersten konvexen Spiegels (7) positioniert ist und einen Durchmesser hat, der kleiner oder gleich dem Durchmesser des ersten konvexen Spiegels ist.

2. Teleskop nach Anspruch 1, wobei der optische Weitfeldpfad (5) eine ringförmige Blende (16) vom Typ Iris umfasst, die in der Mitte des zweiten konkaven Spiegels (8) angeordnet und so verstellbar ist, dass je mehr die Blende (16) geschlossen ist, desto mehr trifft die elektromagnetische Strahlung (3) aus dem optischen Weitfeldpfad (5) auf eine reduzierte Peripherie des Sensors (9).

3. Teleskop nach einem der Ansprüche 1 und 2, wobei der optische Kleinfeldpfad (6) eine invertierte Irisscheibenblende (17) umfasst, die in der Mitte des vierten Spiegels (11) angeordnet und so einstellbar ist, dass je größer der Durchmesser der Blende (17) ist, desto mehr trifft die elektromagnetische Strahlung (4) aus dem optischen Kleinfeldpfad (6) den Sensor (9) auf eine reduzierte Mitte des Sensors (9).

4. Teleskop nach einem der Ansprüche 1 bis 3, wobei der zweite konkave Spiegel (8) in seiner Mitte kreisförmig durch ein Loch (12) mit einem Durchmesser durchbohrt ist, der im Wesentlichen dem Durchmesser des ersten konvexen Spiegels (7) entspricht.

5. Teleskop nach einem der Ansprüche 1 bis 4, wobei der dritte konkave Spiegel (10) einen Durchmesser aufweist, der größer ist als der Durchmesser des zweiten konkaven Spiegels (8), und so eingerichtet ist, dass die maximale Höhe in der Ebene des vierten Spiegels (11) der Radien des Feldzentrums des optischen Kleinfeldpfads (6) kleiner ist als die Hälfte des Durchmessers des vierten Spiegels (11).

6. Teleskop nach einem der Ansprüche 1 bis 5, wobei der erste konvexe Spiegel (7), der zweite konkave Spiegel (8), der dritte konkave Spiegel (10) und der vierte Spiegel (11) kugelförmige oder konische oder asphärische Spiegel sind.

7. Teleskop nach einem der Ansprüche 1 bis 6, wobei die Brennweiten des optischen Weitfeldpfads (5) und des optischen Kleinfeldpfads (6) dasselbe Vorzeichen haben.

8. Teleskop nach einem der Ansprüche 1 bis 7, wobei der optische Weitfeldpfad (5) und/oder der optische Kleinfeldpfad (6) eine Einheit aus einer oder mehreren Linsen umfasst, die so eingerichtet sind, dass sie die elektromagnetische Strahlung jedes optischen Pfades (5; 6) auf den Sensor (9) fokussieren.

9. Teleskop nach einem der Ansprüche 1 bis 8, wobei der optische Kleinfeldpfad (6) mindestens einen zweiten Sensor (26; 27) und mindestens ein Trennmesser (24; 25) umfasst, das so eingerichtet ist, dass es bestimmte Wellenlängen reflektiert, sodass die elektromagnetischen Strahlen, die diesen Wellenlängen entsprechen, auf den zweiten Sensor (26; 27) reflektiert werden.

## Claims

1. A dual-field telescope (2), **characterised in that** it comprises, aligned on the same optical axis (1), a wide-field optical channel (5) of the inverted Cassegrain type, a small-field optical channel (6) of the Cassegrain type and an electromagnetic radiation sensor (9), the wide-field optical channel (5) comprising a convex first mirror (7) and a concave second mirror (8) perforated at its centre, the small-field optical channel (6) comprising a concave third mirror (10) and a fourth mirror (11) positioned at a non-reflective surface (7a) of the convex first mirror (7) and with a diameter smaller than or equal to the diameter of the convex first mirror.

2. The telescope according to claim 1, wherein the wide-field optical channel (5) comprises an iris-type annular diaphragm (16) placed at the centre of the concave second mirror (8) and adjustable so that the more the diaphragm (16) is closed, the more the electromagnetic radiation (3) originating from the wide-field optical channel (5) hits a reduced periphery of the sensor (9).

3. The telescope according to one of claims 1 and 2, wherein the small-field optical channel (6) comprises an inverted iris-type disc diaphragm (17) placed at the centre of the fourth mirror (11) and adjustable so that the larger the diameter of the diaphragm (17), the more the electromagnetic radiation (4) originating from the small-field optical channel (6) hits the sensor (9) over a reduced centre of the sensor (9).

4. The telescope according to any one of claims 1 to 3, wherein the concave second mirror (8) is perforated circularly at its centre by a hole (12) with a diameter substantially equal to the diameter of the convex first mirror (7).

5. The telescope according to any one of claims 1 to 4, wherein the concave third mirror (10) has a diameter larger than the diameter of the concave second mirror (8) and is configured so that the maximum height in the plane of the fourth mirror (11) of the rays of the centre of the field of the small-field optical channel (6) is smaller than half the diameter of the fourth mirror (11).

6. The telescope according to any one of claims 1 to 5, wherein the convex first mirror (7), the concave second mirror (8), the concave third mirror (10) and the fourth mirror (11) are spherical or conical or aspherical mirrors.

7. The telescope according to any one of claims 1 to 6, wherein the focal lengths of the wide-field optical channel (5) and of the small-field optical channel (6) have the same sign.

8. The telescope according to any one of claims 1 to 7, wherein the wide-field optical channel (5) and/or the small-field optical channel (6) comprises an assembly of one or more lens(es) configured to focus the electromagnetic radiations of each optical channel (5; 6) on the sensor (9).

9. The telescope according to any one of claims 1 to 8, wherein the small-field optical channel (6) comprises at least one second sensor (26; 27) and at least one separator blade (24; 25) configured to reflect some wavelengths so that the electromagnetic rays corresponding to these wavelengths are reflected towards the second sensor (26; 27).
